# FASCICULE DE BREVET EUROPEEN

(11) **EP 0 629 588 B1**
(45) Date de publication et mention de la délivrance du brevet: **07.10.1998**
(21) Numéro de dépôt: 94401303.6
(22) Date de dépôt: 10.06.1994
(51) Int. Cl.: C03B 11/06

(54) **Procédé de fabrication de glace de phare, glace ainsi obtenue et moule pour la mise en oeuvre de ce procédé**
Verfahren zum Herstellen des Glases eines Scheinwerfers, Glas erhalten und Form zur Ausführung dieses Verfahrens
Method for making the glass of a dazzle headlight, glass made in that way and mould for executing this method

(30) Priorité: 18.06.1993 FR 9307428
(43) Date de publication de la demande: 21.12.1994
(73) Titulaire: HOLOPHANE, La Société Anonyme dite :, F-27700 Les Andelys (FR)
(72) Inventeur: Blin, Michel, F-78140 Le Petit Quevilly (FR)
(74) Mandataire: Pinguet, André

(56) Documents cités:
- FR-A- 1 274 570
- FR-A- 2 415 607
- GB-A- 458 556
- US-A- 2 691 905

## Description

La présente invention a trait à un procédé de fabrication de glace de phare en verre destinée à être montée sur un boîtier d'un bloc optique, en particulier celui d'un véhicule tel qu'une automobile ou un camion. L'invention définit également une glace de phare obtenue grâce au procédé ainsi qu'un moule pour la mise en oeuvre du procédé.

De façon classique, les glaces de phare se présentent sous la forme d'une cuvette avec un fond sensiblement plat ou bombé dit face avant destiné à être visible une fois la glace mise en place sur le boîtier du bloc optique et des rebords ou jupes périphériques munis d'un pied pour la fixation sur le boîtier. La face avant présente en général des stries optiques pour la diffusion de la lumière. En fonction des zones à éclairer, les stries optiques sont orientées différemment avec des épaisseurs variables. Elles sont situées dans la face avant de la glace du côté donnant vers l'intérieur du boîtier. Le pied présente une certaine épaisseur et un bord destiné à venir en contact avec une rainure ménagée sur le boîtier. Ce bord doit être réalisé avec une grande précision, et on ne peut tolérer le moindre défaut, car l'étanchéité du bloc optique est obtenue à cet endroit par exemple par un joint posé à chaud ou "holt-melt". Il est essentiel que l'étanchéité soit parfaite, car le boîtier comporte un réflecteur couvrant la paroi interne du boîtier et constitué d'une couche d'aluminium déposée sous vide sur un plastique thermo-durcissable par exemple. Une dépression à un endroit quelconque du bord du pied peut permettre une infiltration d'eau et de saletés dommageables pour la couche d'aluminium déposée sur le réflecteur.

Pour la réalisation d'une telle glace de phare, on utilise en général un moule en trois parties. Une poche en forme de cuvette constitue le "négatif" de la glace sur sa face extérieure au boîtier. La poche est lisse et recouverte d'une couche de chrome renouvelable pour protéger l'acier constitutif de la poche. Une pièce annulaire dit "cercle" est reçue sur la poche, à l'extrémité du rebord de la cuvette. Le cercle et la poche définissent à cet endroit le pied du bord de la glace. Enfin un poinçon incorporant le "négatif" des stries optiques est adapté à descendre dans la poche au travers du cercle. Un tel moule est notamment décrit dans le document FR-A-2 415 607.

Lors de la fabrication d'une glace, une goutte de verre en fusion est déposée dans la poche, puis le cercle est mis en place sur le rebord de la poche. Le poinçon est alors abaissé dans la poche et presse la goutte de verre de façon à remplir la totalité du moule. La quantité de verre contenue dans la goutte doit être suffisante pour remplir le moule sans faire de bavure. Cette quantité peut être définie à dix grammes près. L'action de pressage de la goutte de verre est essentielle, car elle permet une formation parfaite des stries optiques. La forte pression générée est rendue possible grâce au cercle qui fait fonction d'organe d'étanchéité : lorsque le verre en fusion arrive à l'endroit du moule correspondant au pied de la glace, sa viscosité est accrue, à un tel point, qu'un interstice inférieur à 0,2 mm ne permet plus au verre de passer au travers. Par sa position à l'endroit où le verre arrive au dernier moment, le cercle permet à l'air contenu originellement dans le moule de s'échapper tout en assurant une pression importante sur le verre qui ne peut fuir en dehors du moule. Le cercle assure également l'étanchéité avec le poinçon lors de sa course dans la poche. C'est justement ce problème d'étanchéité lors de la descente du poinçon qui a dicté la forme des glaces du phare avec des jupes périphériques. Celles-ci sont une conséquence du moule utilisé. D'ailleurs, jusqu'à présent, il est très difficile de fabriquer des glaces de phare avecs des jupes inférieures environ à 5mm de hauteur. La pression nécessaire pour une bonne formation des stries optiques ne peut être obtenue qu'avec une course relativement importante du poinçon dans la poche, c'est-à-dire supérieure à 5 mm. Il existe donc une réelle corrélation entre la forme des glaces de phare et l'exigence d'une pression suffisante quant à leur réalisation.

Cependant, cette technique de fabrication ne permet pas toujours un bon rendement. Un certain nombre de glaces présentent des défauts qui les rendent impropres à leur utilisation finale. Le taux de rebut qui s'ensuit peut atteindre les 25%. En particulier, il arrive fréquemment que le verre en fusion ne parvient pas à remplir la totalité du moule et crée alors des manques qui en général se situent sur le bord du pied. La glace n'est alors plus utilisable. Il se peut aussi que la glace contienne des bulles d'air en trop grande quantité. Enfin, lors de leur manutention d'un poste de travail à l'autre, la glace peut subir des chocs créant des ébréchures.

Un autre problème inhérent à la formation d'une glace de phare en verre provient de l'obtention de la goutte de verre en fusion.

Le verre arrive jusqu'au moule en provenance d'un four sous la forme d'un flot continu. Une goutte de verre est alors coupée au ciseau au droit de la poche. Ce coup de ciseau laisse une trace dans la glace qui a des effets désavantageux sur un plan optique. Ce coup de ciseau ne peut être éliminé, c'est pourquoi on essaye de le situer dans la partie de la glace correspondant à l'éclairage de la route. C'est l'endroit le moins préjudiciable.

Un des buts depuis longtemps recherché par les constructeurs automobiles est le gain de poids de leurs véhicules. Dans une glace classique telle que définie ci-dessus, 50 à 70% du poids est constitué par la jupe périphérique et le pied. Ces deux parties ne participent pas à la qualité optique de la glace, mais aident à sa rigidité lors de son moulage et assure la liaison entre la face avant et le boîtier.

D'autre part, le design est un élément important pour le succès commercial d'un véhicule et les blocs optiques participent pour une grande part dans l'esthétique de l'avant d'un véhicule. Par la technique de pressage du verre en fusion, on ne peut obtenir en pratique un rapport longueur/largeur supérieur à 4. Ceci provient du fait que le verre perd de sa viscosité au contact de la poche et du poinçon et perd alors de son pouvoir d'étalement. La forme des glaces est alors limitée par un impératif technique et ne peut suivre l'évolution du design. Actuellement, la tendance est à l'aplatissement ou l'allongement des glaces de phare. Malenconteusement, cette tendance est réfreinée par la limite d'un rapport de 4.

Ce problème a déjà été partiellement résolu par la réalisation et l'utilisation de glaces de phare en matière plastique transparente. Contrairement au verre, le plastique est injectée sous forme fluide dans un moule. La dimension des glaces de phare n'est alors plus limitée à un rapport de 4. On peut réaliser des glaces très étroites avec des particularités de forme irréalisables avec du verre pressé. En outre, la densité du plastique est telle, que l'on peut obtenir des glaces de faible poids.

L'utilisation du plastique présente cependant certains inconvénients liés à la nature même du matériau. Sa rigidité est moins grande que celle du verre. Une glace en verre, après assemblage, rigidifie le bloc optique alors qu'avec une glace en plastique, le boîtier doit être renforcé ce qui provoque un coût supérieur de réalisation. Enfin, le plastique en lui-même est un matériau plus coûteux que le verre. La fabrication de glaces en plastique s'en trouve dont également affecté.

D'autre part, le plastique nécessite un traitement de surface pour résister aux rayons UV que le verre n'exige pas. En outre, pour des glaces de phare particulièrement étroites avec l'ampoule montée à proximité de la glace, la chaleur restituée par l'ampoule dégrade les qualités du plastique qui se déforme alors que le verre reste stable.

La présente invention a pour but de définir un nouveau procédé de fabrication d'une glace de phare donnant satisfaction.

Pour ce faire, l'invention a pour objet un procédé de fabrication d'une glace de phare destinée à être montée sur un support, notamment un boîter d'un bloc optique, caractérisé en ce qu'il comprend l'étape de presser une goutte de verre dans un moule de façon à obtenir une ébauche de dimension supérieure à la glace de phare, puis de découper dans l'ébauche ladite glace de phare de façon à obtenir des rebuts et une glace ayant des dimensions et/ou des formes qui ne peuvent être obtenues directement par un moulage utilisant la totalité de la goutte de verre.

Par ce procédé, on peut éliminer la jupe périphérique qui constituait 50 à 70% du poids. Il en résulte un gain de poids considérable qui répond à l'attente des constructeurs et équipementiers. Par ailleurs, le découpage de la glace de phare permet de laisse libre-court aux formes qui ne sont maintenant plus limitées par un rapport longueur/largeur de 4. Les glaces pourront être réalisées directement à la demande : il suffira d'introduire un nouveau modèle de découpe dans la mémoire de l'instrument de découpe. Les formes fortement oblongues sont maintenant permises.

Selon une caractéristique particulièrement avantageuse de l'invention, la goutte de verre est déposée dans le moule de façon que les défauts inhérents au moulage se forment dans les rebuts.

La totalité de la goutte de verre n'est pas utilisée pour la réalisation de la glace de phare d'où il résulte des rebuts de verre qui seront concassés puis à nouveau introduit dans le four pour refonte. En orientant la goutte de verre dans le moule, on parvient à canaliser les défauts apparus lors du moulage dans les parties à rebuter. Les défauts les plus fréquents déjà cités ci-dessus sont le manque de matière sur les bords de l'ébauche du à la perte de viscosité du verre lors du moulage, les ébréchures pouvant survenir lors des transferts de la glace d'un poste de travail à l'autre, et surtout la marque du coupe de ciseau pour former la goutte de verre en fusion. Le taux de rebut s'élevant auparavant jusqu'à 25% est maintenant abaissé à 5% à peine. De plus, les défauts étant formés dans les rebuts ne sont pas gênants, et il n'est pas nécessaire de prendre des précautions pour limiter les défauts. On peut ainsi travailler plus vite, et cela avec beaucoup moins de pièces éliminées pour défauts.On pourra alors compenser le surcoût généré par la techique de découpe, de préférence au jet d'eau, par une hausse de la productivité, c'est-à-dire des cadences de production. Le travail de contrôle des pièces en bout de chaîne de fabrication pourra également être allégé du fait de l'élimination préalable de la plupart des causes de rebut.

Les bords de collage de la glace sont obtenus par découpage dans une zone de l'ébauche exempte de défauts. Ainsi, ils sont toujours parfaitement formés. La précision sur le bord du pied n'est donc plus nécessaire pour obtenir une étanchéité effective.

Par cette technique nouvelle, on réalise des glaces de phare en verre ayant les mêmes avantages de légèreté et de tolérance de forme que les glaces en plastique, tout en évitant les inconvénients du plastique.

Avantageusement, le procédé peut avoir la caractéristique additionelle que l'ébauche a la forme d'une cuvette avec un fond sensiblement plat et un bord saillant par rapport audit fond, ladite glace étant découpée dans le fond de l'ébauche de façon à définir une glace de phare sensiblement plate exempte de jupes périphériques.

Selon l'invention la glace de phare pourra être réalisée à partir d'un glace de phare classique avec jupe périphérique en découpant la glace classique de sorte que la jupe périphérique constitue la partie à rebuter incorporant les défauts de moulage énoncés ci-dessus. C'est la forme la plus simple d'application de la présente invention en utilisant les moules de glaces de phare déjà existants. En outre, cela permet un allègement maximum de la glace très concurrentiel par rapport au verre.

Par ailleurs, l'invention définit aussi un moule pour la mise en oeuvre du procédé comportant une poche en forme de cuvette avec un fond et un rebord saillant, un cercle destiné à être adapté sur le rebord saillant et un poinçon ayant une forme complémentaire de la poche et adapté à être reçu dans ladite poche en passant au travers du cercle, le fond de la poche et la surface correspondante du poinçon présentant chacun une zone de traitement optique du verre en regard l'une de l'autre pour conférer à ladite ébauche moulée des qualités optiques requises pour une glace de phare, caractérisé en ce que lesdites zones sout prévues localement dans les parties du fond et de la surface du poinçon définissant la glace de phare à découper.

Le moule ainsi défini est un moule classique, hormis que la zone de traitement optique ne s'étend que sur la partie d'ébauche correspondant à la glace de phare à découper. Par la zone de traitement optique, on entend par là des reliefs "négatifs" tels que les stries optiques formées en négatif sur une partie du poinçon ainsi qu'une finition de surface parfaite requise pour la poche. Ces zones nécessitent une maintenance constante et une réfection régulière. En limitant ces zones aux seules parties définissant la glace de phare, on réduit également le temps passé à leur entretien.

Selon une autre forme de réalisation du procédé de l'invention il est prévu que l'ébauche a la forme d'une cuvette avec un rebord saillant, et un fond présentant une dépression, ladite dépression comprenant également un fond sensiblement plat avec un bord reliant le fond de la cuvette, ladite glace de phare étant découpée dans le fond de ladite cuvette au niveau du bord de la dépression de façon à définir une glace de phare sensiblement plate et pourvue d'une jupe périphérique.

Jusqu'à présent, il était très difficile de réaliser des glaces de phare ayant une jupe périphériqiue inférieure à 5mm de hauteur. En réalisant une ébauche en forme d'une double cuvette emboîtée l'une dans l'autre, on peut obtenir des glaces avec une jupe de moins de 5 mm de hauteur. Toujours avec la même ébauche, il est possible de découper la glace de phare avec une jupe de hauteur classique de 2 à 3 cm. On obtient ainsi une glace de phare telle qu'existant dans l'art antérieur. Cependant, le bord formé par découpage est assurément parfait et la glace ne comporte aucun défaut étant donné qu'ils ont tous été canalisés dans le rebut formé par le fond et le rebord de la cuvette. Il en résulte donc un double avantage.

L'invention définit aussi un moule selon la revendication 6.

Dans ce moule le fond de la dépression et une partie du poinçon complémentaire au fond de ladite dépression sont traités en surface de façon à conférer à ladite ébauche moulée des qualités optiques requises pour une glace de phare.

Ainsi, seule la partie d'ébauche correspondant à la face avant du phare sera pourvue de stries optiques et d'une finition de surface, pour des raisons de maintenance déjà exposées ci-dessus.

Selon une caractéristique additionnelle du procédé selon l'invention, la glace présente un contour de découpe incorporant des pattes d'agrafage pour fixer la glace sur un support.

Avantageusement, la glace a une forme oblongue avec un rapport longueur/largeur supérieur à 4.

Pour des glaces de phares particulièrement étroites et allongées, le plastique ne présente pas les qualités nécessaires pour résister aux conditions thermiques intenses régnant à l'intérieur du boîtier du bloc optique. En dimensionnant l'ébauche avec une taille suffisamment grande, car elle doit respecter le rapport maximal longueur/largeur d'environ 4, on peut réaliser des glaces de phare ayant un rapport largement supérieur à 4. Le plastique peut ainsi être supplanter dans la totalité des réalisations de glaces de phare.

La présente invention sera maintenant décrite plus amplement au regard des dessins annexés donnant à tire d'exemple non limitatif des modes de réalisation de l'invention.

Sur les dessins :
- la figure 1 est une vue de dessus d'une ébauche moulée incorporant en pointillé le contour d'une glace de phare à découper selon la présente invention,
- la figure 2 est une vue légèrement agrandie de la glace de phare découpée de la figure 1,
- la figure 3 est une vue en coupe d'un moule utilisé pour la fabrication d'une glace de phare selon le présent procédé, et
- la figure 4 est une vue en coupe d'une autre forme de réalisation d'un moule pour la fabrication d'une glace de phare selon le présent procédé.

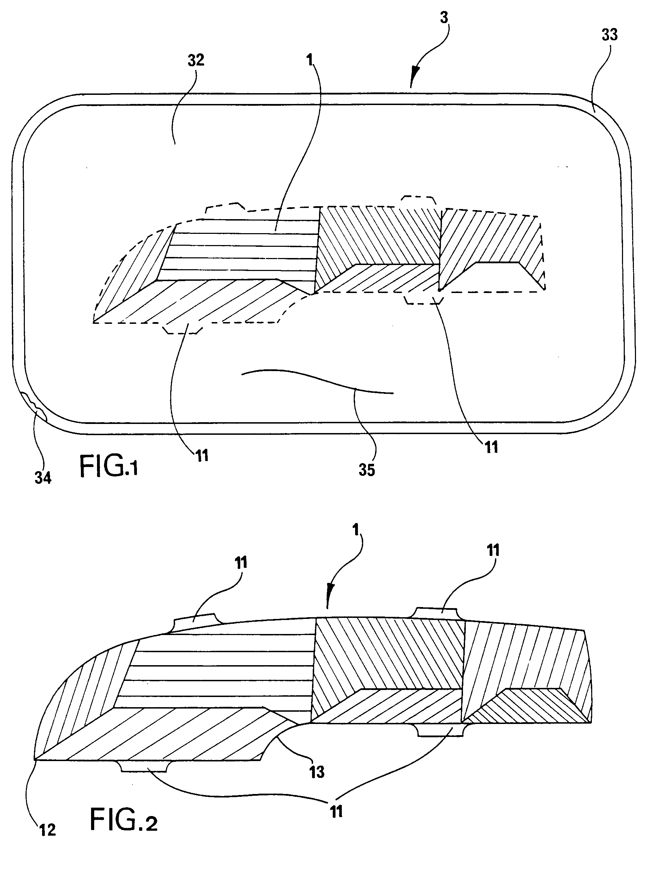

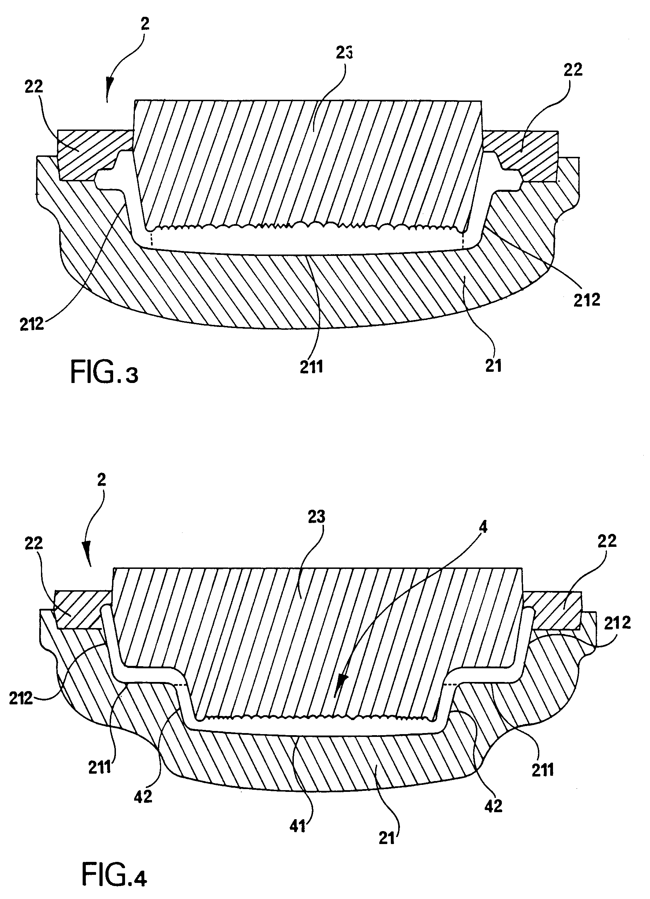

Sur la figure 1, on a représenté une ébauche de verre 3 réalisée par pressage d'une goutte de verre en fusion dans un moule 2 analogue à celui représenté sur la figure 3.L'ébauche 3 présente sur son pourtour un bord saillant 33 par rapport au fond 32 sensiblement plat. La forme du fond 32 peut varier en fonction de la courbure plus ou mois grande que l'on veut donner à la face avant de la glace de phare. L'ébauche est de forme sensiblement rectangulaire mais peut également être ronde ou ovale. Le rapport longueur/largeur de l'ébauche est inférieur à 4 pour des raisons de viscosité du verre en fusion lors du du pressage de la goutte de verre. Le bord 33 mesure environ 2 à 3 cm de hauteur. Cette hauteur peut être réduite à environ 5 mm mais pas moins du fait de l'utilisation d'une presse constituée d'un poinçon 23 descendant dans une poche 21 comme représentée sur la figure 3. En effet, la goutte de verre est déposée dans la poche 21, puis un cercle 22 vient se positionner sur la poche 21. Ce cercle 22 remplit la fonction d'organe d'étanchéité du moule 2. Un poinçon 23 vient alors écraser la goutte de verre en fusion de façon à ce que le verre occupe la totalité du volume du moule 2. La viscosité du verre est telle lorsqu'il arrive dans la zone du moule correspondant au bord 33 qu'il ne peut s'infiltrer au travers d'un interstice inférieur à 0,2 mm. Le cercle 22 réalise un contact à la fois avec la poche 21 et le poinçon 23 permettant l'évacuation de l'air contenu dans le moule sans pour autant laisser s'échapper le verre en fusion. La goutte de verre est utilisée dans la totalité pour former l'ébauche 3. Un tel moule 2 est utilisé pour appliquer une pression importante sur le verre en fusion. La pression développée est notamment nécessaire pour une bonne formation de stries optiques formées sur la face avant de la glace de phare. Ces stries optiques servent à diffuser la lumière produite par l'ampoule située au fond d'un boîter d'un bloc optique.

Sur la figure 1, la partie centrale du fond 32 de l'ébauche 3 est pourvue de telles stries optiques. Elles s'étendent sur une zone correspondant à la glace de phare 1.

Selon l'invention, la glace de phare délimitée en pointillés sur la figure 1 est découpée dans l'ébauche 3. La découpe est de préférence effectuée au jet d'eau, mais il va de soi que n'importe quelle technique de découpe appropriée est également utilisable dans le cadre de la présente invention. Contrairement à l'ébauche, la glace de phare 1 n'est pas limitée dans son rapport longueur/largeur et présente une forme impossible à réaliser par moulage uniquement. La figure 2 montre de façon légèrement agrandie la glace de phare 1 découpée de la figure 1. Celle-ci présente à son extrême gauche une pointe 12 et un décroché 13 ainsi que des pattes d'agrafage 1 pour la fixer sur un boîtier de bloc optique de véhicule. Toutes les caractréistiques sont rendues possibles grâce au découpage de la glace de phare. La glace pourra aussi être directement collée sur le boîtier. Le bord de glace étant découpé dans la partie centrale de l'ébauche, il n'y a pratiquement aucun risque de malformation.

Selon une caractéristique particulièrement avantageuse de la présente invention, l'ébauche est moulée de façon à ce que les défauts inhérents au moulage se forment dans la partie de l'ébauche à rebuter. La canalisation des défauts est rendue possible en orientant la disposition de la goutte de verre dans la poche 21. Par exemple, les manques 34 de matière ou le coup de ciseau 35 pour séparer la goutte de verre en fusion sont situés dans la partie à rebuter. Cela permet d'obtenir de façon quasiment sure une glace de phare exempte de défauts. Il en résulte un abaissement considérable du taux de rebut. Le rebut ou chute de verre est ensuite concassé puis à nouveau fondu pour être réutilisé pour l'obtention d'une nouvelle ébauche.

Sur les figure 3 et 4, on a représenté deux moules pour la mise en oeuvre du présent procédé pour la frabrication de deux types différents de glace de phare.

Le moule de la figure 3 est adapté à la fabrication de glaces de phare sans jupe périphérique. La ligne de découpe est indiquée sur la figure par des traits pointillés. De façon classique, le moule est constitué d'une poche 21 en forme de cuvette avec un fond 211 sensiblement plat ou légèrement bombé et un rebord saillant 212 par rapport audit fond 211. Un cercle 22 s'adapte sur le rebord de la poche 21 et un poinçon 23 descend dans la poche 21 au travers dudit cercle 22. Ces trois éléments définissent ensemble un volume intercalaire correspondant à celui de l'ébauche. Le poinçon 23 présente sur sa surface en regard du fond 211 de la poche un relief "négatif" correspondant aux stries optiques de la glace de phare. Dans l'exemple illustré sur la figure 3, ce relief s'étend sur la totalité du poinçon 23. La glace à découper sera donc constituée par la totalité du fond 32 de l'ébauche 3, les défauts étant refoulés dans la partie de l'ébauche formée par le rebord saillant 212 de la poche 21. Le moule de la figure 3 est en réalité un moule classique tel qu'utilisé pour la fabrication des glaces de phare avec jupe périphérique, la zone de formation des stries optiques s'étendant sur la totalité de la surface de pression directe du poinçon 23. De son côté, le fond de la poche est également traité en surface pour conférer à la glace une qualité optique requise. La poche 3 est régulièrement chromée pour protéger l'acier constitutif du moule.

Pour la réalisation d'une ébauche comme celle de la figure 1, on peut utiliser le même moule que celui de la figure 3, hormis que les zones de traitement optiques (stries du poinçon 23, surfaçage du fond 211) sont strictement limitées au contour de la glace à découper.

Sur la figure 4, le moule représenté est adapté à la fabrication de glaces de phare avec jupe périphérique. La ligne de découpe ne se situe plus au ras du fond, mais au niveau des bords. La poche 21 définit une double cuvette emboîtée l'une dans l'autre. La cuvette de plus grande dimension présente un fond 211 et un rebord saillant 212 dans lesquels seront orientés les défauts de moulage de l'ébauche. La cuvette de plus petite dimension est formée à partir du fond 211 et présente également un fond 41 sensiblement plat ou légèrement bombé avec un bord saillant 42 reliant le fond de la cuvette de plus grande dimension. Un cercle vient s'adapter sur le rebord 212 et un poinçon 23 de forme complémentaire de la poche 21 est reçu dans la poche au travers du cercle 22. Tout comme le moule de la figure 3, la poche 23 et le poinçon incorporent, à l'endroit correspondant à la glace de phare, des zones de traitement optiques (stries, surfaçage). L'ébauche résultant de ce moule sera ensuite découpée au niveau du fond 211 de la cuvette de plus grande dimension, laissant les défauts de moulage dans les parties à rebuter, c'est-à-dire le rebord 212 et le fond 211. La glace de phare ainsi réalisée est de forme identique à celle d'une glace de phare conventiennelle, hormis que celle réalisée selon la présente invention est assurément exempte de tout défaut de moulage.

La présente invention permet de réaliser des glaces de phare ayant les formes les plus diverses, avec une qualité parfaite et un taux de rebut pratiquement nul. La glace de phare résultante allie à la fois les qualités de dureté et de rigididté du verre à celle de légèreté et tolérance de formes du plastique.

## Revendications

1. Procédé de fabrication d'une glace de phare (1) destinée à être montée sur un support, notamment un boîter d'un bloc optique, caractérisé en ce qu'il comprend l'étape de presser une goutte de verre dans un moule (2) de façon à obtenir une ébauche (3) de dimension supérieure à la glace de phare (1), puis de découper dans l'ébauche ladite glace de phare (1) de façon à obtenir des rebuts et une glace ayant des dimensions et/ou des formes qui ne peuvent être obtenues directement par un moulage utilisant la totalité de la goutte de verre.

2. Procédé de fabrication selon la revendication 1, dans lequel la goutte de verre est déposée dans le moule de façon que les défauts inhérents au moulage se forment dans les rebuts.

3. Procédé de fabrication selon la revendication 1 ou la revendication 2, caractérisée en ce que l'ébauche (3) a la forme d'une cuvette avec un fond sensiblement plat (32) et un bord saillant (33) par rapport audit fond, ladite glace étant découpée dans le fond (32) de l'ébauche (3) de façon à définir une glace de phare (1) sensiblement plate exempte de jupes périphériques.

4. Moule pour la mise en oeuvre du procédé selon la revendication 1 ou la revendication 2, comportant une poche (21) en forme de cuvette avec un fond (211) et un rebord saillant (212), un cercle (22) destiné à être adapté sur le rebord saillant (212) et un poinçon (23) ayant une forme complémentaire de la poche (21) et adapté à être reçu dans ladite poche (21) en passant au travers du cercle (22), le fond (211) de la poche (21) et la surface correspondante du poinçon (23) présentant chacun une zone de traitement optique du verre en regard l'une de l'autre pour conférer à ladite ébauche (3) moulée des qualités optiques requises pour une glace de phare, caractérisé en ce que lesdites zones sont prévues localement dans les parties du fond et de la surface du poinçon définissant la glace de phare (1) à découper.

5. Procédé de fabrication selon la revendication 1 ou la revendication 2, caractérisée en ce que l'ébauche a la forme d'une cuvette avec un rebord saillant (33), et un fond (32) présentant une dépression (4), ladite dépression (4) comprenant également un fond sensiblement plat (41) avec un bord reliant (42) le fond de la cuvette, ladite glace de phare (1) étant découpée dans le fond (32) de ladite cuvette au niveau du bord (42) de la dépression (4) de façon à définir une glace de phare (1) sensiblement plate et pourvue d'une jupe périphérique.

6. Moule pour la mise en oeuvre du procédé selon la revendication 1 ou la revendication 2, comportant une poche (21) en forme de cuvette avec un fond (211) et un rebord saillant (212), un cercle (22) destiné à être adapté sur ledit rebord saillant (212) de la cuvette et un poinçon (23) ayant une forme complémentaire de la poche (21) et adapté à être reçu dans ladite poche (21) en passant au travers du cercle, caractérisé en ce que le fond présente une dépression (4) comprenant également un fond sensiblement plat (41) avec un bord reliant (42) le fond de la cuvette, le fond sensiblement plat (41) de la dépression (4) et la surface correspondante du poinçon (23) présentant chacun une zone de traitement optique du verre en regard l'une de l'autre pour conférer à ladite ébauche (3) moulée des qualités optiques requises pour une glace de phare.

7. Moule selon la revendication 6, dans lequel le fond (41) de la dépression (4) et une partie du poinçon (23) complémentaire au fond (41) de ladite dépression sont traités en surface de façon à conférer à ladite ébauche (3) moulée des qualités optiques requises pour une glace de phare.

8. Procédé de fabrication selon la revendication 3 ou la revendication 5, dans laquelle la glace présente un contour de découpe incorporant des pattes d'agrafage (11) pour fixer la glace (1) sur un support.

9. Procédé de fabrication selon la revendication 3, la revendication 5 ou la revendication 8, dans laquelle la glace a une forme oblongue avec un rapport longueur/largeur supérieur à 4.

## Claims

1. A method of fabricating a headlight glass (1) designed to be mounted on a support, in particular a housing of a headlight unit, the method being characterized in that it comprises the step of pressing a drop of glass in a mold (2) so as to obtain a blank (3) of size that is larger than the headlight glass (1), and then cutting said headlight glass (1) out from the blank in such a manner as to obtain scrap and a glass having dimensions and/or shapes that cannot be obtained directly by a molding that makes use of the drop of glass in its entirety.

2. A method of fabricating according to claim 1, in which the drop of glass is deposited in the mold in such a manner that defects inherent to molding from in the scrap.

3. A method of fabricating according to claim 1 or claim 2, characterized in that the blank (3) is dish-shaped having a substantially flat bottom (3é) and a rim (33) projecting from said bottom, said glass being cut out from the bottom (32) of the blank (3) in such a manner as to define a headlight glass (1) that is substantially flat and lacking in peripheral skirts.

4. A mold for implementing the method of claim 1 or claim 2, comprising a dish-shaped cup (21) having a bottom (211) and a projecting rim (212), a circle (22) designed to be fitted on the projecting rim (212), and a punch (23) that is complementary in shape to the cup (21) and that is adapted to be received in said cup (21) by passing through the circle (22), the bottom (211) of the cup (21) and the corresponding surface of the punch (23) comprising each an optical treatment zone facing one another to impart the optical qualities required for a headlight glass to be molded blank (3) characterized in that said zones are formed locally in the parts of the bottom and the surface punch defining the headlight glass (1) that is to be cut out.

5. A method of fabricating according to claim 1 or claim 2, characterized in that the blank is in the form of a dish with a projecting rim (33), having a bottom (32) that presents a depression (4), said depression (4) likewise having a bottom (41) that is substantially flat and a rim (42) projecting from the bottom of the dish-shape, said headlight glass (1) being cut out from the bottom (32) of said dish-shape at the edge (42) of the depression (4) so as to define a headlight glass (1) that is substantially flat and that is provided with a peripheral skirt.

6. A mold for implementing the method of claim 1 or claim 2, comprising a dish-shaped cup (21) having a bottom (211) and a projecting rim (212), a circle (22) designed to be fitted on said projecting rim (212) of the dish-shape, and a punch (23) that is complementary in shape to the cup (21) and that is adapted to be received in said cup (21) by passing through the circle, characterized in that the bottom has a depression (4) also comprising a bottom (41) that is substantially flat and a rim (42) connecting the bottom of the dish-shape, the substantially flat bottom (41) of the depression (4) and the corresponding surface of the punch (23) comprising each an optical treatment zone facing one another to impart the optical qualities required for a headlight glass to be molded blank (3).

7. A mold according to claim 6, in which the bottom (41) of the depression (4) and the portion of the punch (23) that is complementary to the bottom (41) of said depression are surface-treated in such a manner as to confer the optical qualities required of a headlight glass to said molded blank (3).

8. A method of fabricating according to claim 3 or claim 5, in which the outline of the glass for cutting out incorporates fastening tabs (11) for fixing the glass (1) on a support.

9. A method of fabricating according to claim 3, claim 5, or claim 8, in which the glass is oblong in shape having a length/width ratio that is greater than 4.

## Patentansprüche

1. Verfahren zum Herstellen eines Scheinwerferglases (1), welches dazu bestimmt ist, auf einen Träger, insbesondere ein Gehäuse eines Optikblockes montiert zu werden, dadurch **gekennzeichnet**, daß es den Schritt umfaßt, einen Glastropfen in einer Weise in eine Form (2) zu drücken, daß man einen Rohling (3) mit Abmessungen erhält, die größer als die des Scheinwerferglases (1) sind, sodann aus dem Rohling dieses Scheinwerferglas (1) in einer Weise auszuschneiden, daß man Abfallstücke und ein Glas mit Abmessungen und/oder Formen erhält, die man nicht direkt durch Formen unter Verwendung des gesamten Glastropfens erhalten kann.

2. Verfahren zum Herstellen nach Anspruch 1, bei welchem der Glastropfen in die Form in einer Weise eingelegt wird, daß sich die mit dem Formen verbundenen Formfehler bei den Abfallstücken bilden.

3. Verfahren zum Herstellen nach Anspruch 1 oder Anspruch 2, dadurch **gekennzeichnet**, daß der Rohling (3) die Form einer Schale mit einem im wesentlichen flachen Boden (32) und einem gegenüber diesem Boden vorspringenden Rand (33) hat, wobei das Glas aus dem Boden (32) des Rohlings (3) in einer Weise ausgeschnitten wird, daß ein im wesentlichen flaches Scheinwerferglas (1) ohne Umfangsschürzen gebildet wird.

4. Form für die Durchführung des Verfahrens gemäß dem Anspruch 1 oder dem Anspruch 2, umfassend eine Tasche (21) in der Form einer Schale mit einem Boden (211) und einer vorspringenden Einfassung (212), einen Ring (22), welcher dazu bestimmt ist, auf die vorspringende Einfassung (212) aufgepaßt zu werden, sowie einen Stempel (23), welcher eine zu der Tasche (21) komplementäre Form hat und dazu ausgelegt ist, in dieser Tasche (21) aufgenommen zu werden, indem er durch den Ring (22) hindurchtritt, wobei der Boden (211) der Tasche (21) und die entsprechende Oberfläche des Stempels (23) einander gegenüberliegend jeweils einen Bereich für die optische Gestaltung des Glases aufweist, um dem geformten Rohling (3) die für ein Scheinwerferglas geforderten optischen Qualitäten zu verleihen, dadurch **gekennzeichnet**, daß diese Bereiche örtlich in den Partien des Bodens und der Oberfläche des Stempels vorgesehen sind, welche daß auszuschneidende Scheinwerferglas (1) bilden.

5. Verfahren zum Herstellen gemäß dem Anspruch 1 oder dem Anspruch 2, dadurch **gekennzeichnet**, daß der Rohling die Form einer Schale mit einer vorspringenden Einfassung (33) und einem Boden (32) hat, welcher eine Mulde (4) aufweist, wobei die Mulde (4) ebenfalls einen im wesentlichen flachen Boden (41) mit einem diesen an den Boden der Schale anschließenden Rand (42) umfaßt, wobei das Scheinwerferglas (1) aus dem Boden (32) dieser Schale in Höhe des Randes (42) der Mulde (4) in einer Weise ausgeschnitten wird, daß ein im wesentlichen flaches und mit einer Umfangsschürze versehenes Scheinwerferglas (1) gebildet wird.

6. Form für die Durchführung des Verfahrens gemäß dem Anspruch 1 oder dem Anspruch 2, umfassend eine Tasche (21) in Schalenform mit einem Boden (211) und einer vorspringenden Einfassung (212), einen Ring (22), welcher dazu bestimmt ist, auf die vorspringende Einfassung (212) der Schale aufgepaßt zu werden, und einen Stempel (23), welcher eine zu der Tasche (21) komplementäre Form hat und dazu ausgelegt ist, in der Tasche (21) aufgenommen zu werden, indem er durch den Ring hindurchtritt, dadurch **gekennzeichnet**, daß der Boden eine Mulde (4) aufweist, die ebenfalls einen im wesentlichen flachen Boden (41) mit einem diesen an den Boden der Schale anschließenden Rand (42) aufweist, wobei der im wesentlichen flache Boden (41) der Mulde (4) und die entsprechende Oberfläche des Stempels (23) einander gegenüberliegend jeweils einen Bereich für die optische Gestaltung des Glases aufweisen, um dem geformten Rohling (3) die für ein Scheinwerferglas geforderten optischen Qualitäten zu verleihen.

7. Form nach Anspruch 6, bei welcher der Boden (41) der Mulde (4) und ein zu dem Boden (41) dieser Mulde komplementärer Teil des Stempels (23) auf ihrer Oberfläche in einer Weise gestaltet sind, daß dem geformten Rohling (3) für ein Scheinwerferglas geforderte optische Qualitäten verliehen werden.

8. Verfahren zur Herstellung nach Anspruch 3 oder Anspruch 5, bei welchem das Glas eine Ausschneidekontur hat, die Falzverbindungsfüße (11) zum Befestigen des Glases (1) auf einem Träger aufweist.

9. Verfahren zur Herstellung gemäß Anspruch 3, Anspruch 5 oder Anspruch 8, bei welchem das Glas eine längliche Form mit einem Verhältnis Länge/Breite hat, das größer als 4 ist.
